(19) **Europäisches Patentamt / European Patent Office / Office européen des brevets**

(11) **EP 2 290 829 A2**

(12) **EUROPEAN PATENT APPLICATION**

(43) Date of publication:
**02.03.2011 Bulletin 2011/09**

(51) Int Cl.:
***H04B 1/16*** *(2006.01)*

(21) Application number: **10007787.4**

(22) Date of filing: **27.07.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **24.08.2009 JP 2009193328**

(71) Applicant: **Renesas Electronics Corporation
Nakahara-ku
Kawasaki
Kanagawa 211-8668 (JP)**

(72) Inventor: **Kawai, Yosuke
Kawasaki,
Kanagawa 211-8668 (JP)**

(74) Representative: **Glawe, Delfs, Moll
Patent- und Rechtsanwälte
Postfach 26 01 62
80058 München (DE)**

(54) **Sound signal processor, FM receiver, and method of processing sound data**

(57)  A sound signal processor and an FM signal receiver that, when a detection is made of a sound signal becoming abnormal, can smoothly perform interpolation processing without sound level rapidly changing. The sound processor includes: a demodulator that demodulates a sound signal; an abnormality detector that detects the sound signal becoming abnormal; a holding unit that receives as input the sound signal demodulated by the demodulator, and holds the sound signal before an abnormality is detected, at least in a time-period in which the abnormality detector detects the abnormality; and a weighted averaging processor that receives as input the sound signal newly demodulated by the demodulator and the sound signal held by the holding unit, and after recovery from the abnormality, gradually switches from the sound signal held by the holding unit to the sound signal demodulated by the demodulator, and outputs the averaged sound signal.

FIG. 1

## Description

TECHNICAL FIELD

[REFERENCE TO RELATED APPLICATION]

This application is based upon and claims the benefit of the priority of Japanese patent application No. 2009-193328, filed on August 24, 2009, the disclosure of which is incorporated herein in its entirety by reference thereto. The present invention relates to a sound signal processor, an FM receiver, and a method of processing sound data thereof. In particular, the invention relates to reception of sound from a TV broadcast, and to interpolation processing when an abnormality occurs in received data.

BACKGROUND

Conventionally, in an FM receiver or the like, which is mounted in a moving vehicle such as an automobile or the like, when an audio signal is received, it is known that multipath interference occurs due to reflection of electromagnetic waves from obstacles, such as mountains, buildings, or the like, in surrounding areas, and that a demodulated sound signal becomes abnormal.

Patent Document 1 describes a conventional FM receiver that interpolates for missing signals when there is an abnormality due to the multipath interference. Fig. 9A is a block diagram of the conventional FM receiver described in Patent Document 1, Fig. 9B is an explanatory drawing for interpolation by an interpolation signal.

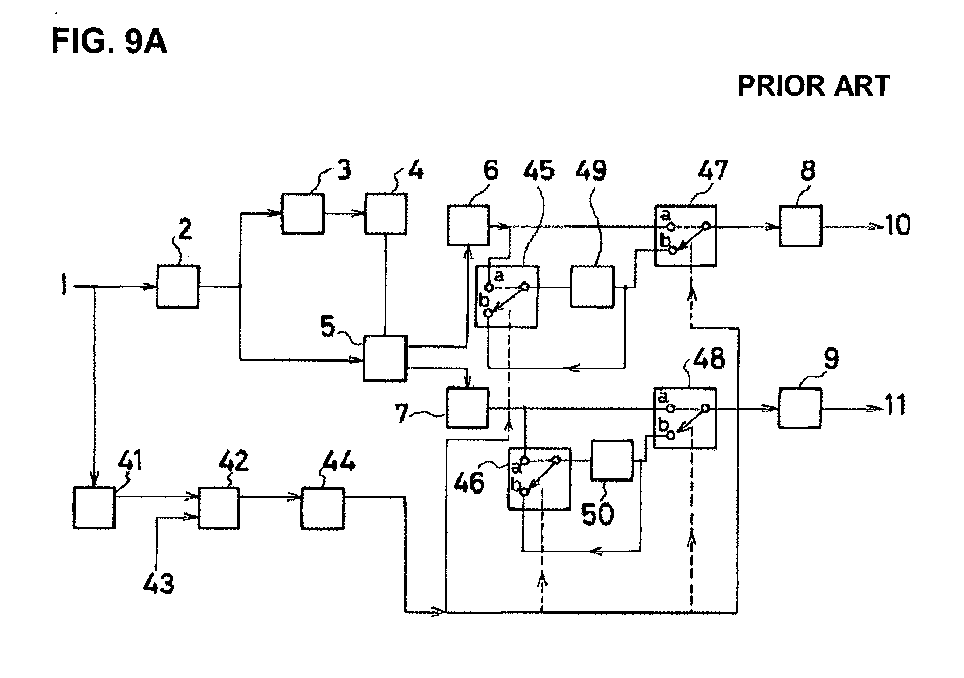

In Fig. 9A, when reception is normal, an intermediate frequency signal 1 is FM-demodulated by a discriminator (FM demodulator) 2, and sound signals from LPFs 6 and 7, which have undergone stereo demodulation, becomes a left ear signal 10 and a right ear signal 11, via electronic switchers 47 and 48, to be outputted. Furthermore, the intermediate frequency signal 1, with its amplitude detected by an envelope wave detector 41, is compared with a reference value 43 by an amplitude comparison circuit 42, and when the amplitude detection signal is less than the reference value 43, a control pulse is outputted by a control pulse generator 44, electronic switchers 45, 46, 47, and 48 are switched from an "a" side to a "b" side, and interpolation is performed. The interpolation is performed, by delay elements 49 and 50, by repetition and outputting of a demodulation signal before switching is performed, at a prescribed cycle.

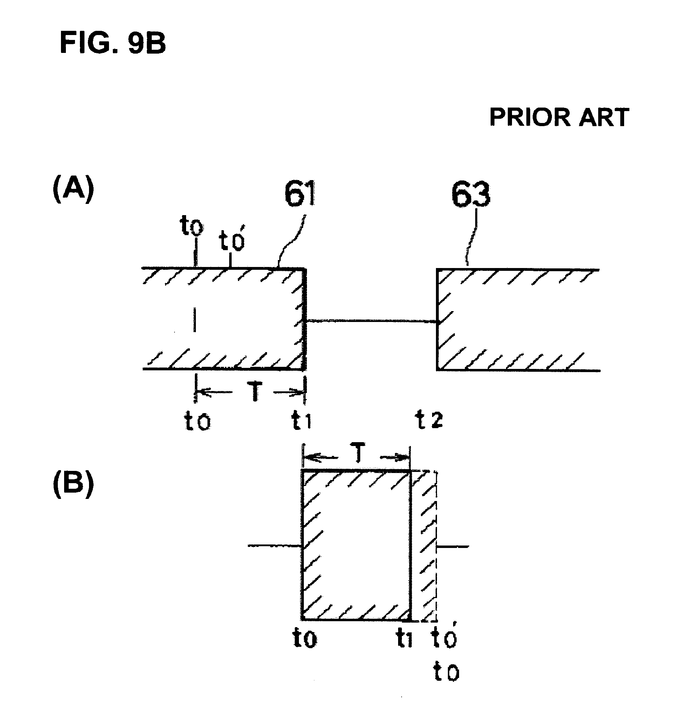

As shown in Fig. 9B, when interpolation from t1 to t2 is performed, the interpolation is performed by repeating a sound signal (A) in a time-period T of t0 to t1 just before t1, and performing output.

Furthermore, Patent Document 2 describes an FM signal processor in which an input signal, when sampling is presently being carried out, is attenuated and an output signal is generated, in a case where noise, due to multipath noise, is detected.

[Patent Document 1] JP Patent Kokai Publication No. JP-A-6-152551
[Patent Document 2] JP Patent Kokai Publication No. JP-P2003-283349A

SUMMARY

The entire disclosures of Patent Documents 1 and 2 are incorporated herein by reference thereto. The following analysis is given by the present invention. An abnormality in a demodulated sound signal occurs even in cases where an FM signal is overmodulated. If the FM signal is modulated, exceeding a frequency band, it is outside the range of a band filter of a receiver, and sound information cannot be extracted.

Furthermore, in a case of interpolating a noise time-period as in Patent Document 1, particularly when returning from an interpolated signal to a normal signal, there are cases in which a difference in level of the interpolation signal and the normal signal occurs, and a sound that is disagreeable to listen to is generated.

According to a first aspect of the present invention, there is provided a sound signal processor including: a demodulator that demodulates a sound signal; an abnormality detector that detects the sound signal becoming abnormal; a holding unit that receives as input the sound signal demodulated by the demodulator, and holds the sound signal before an abnormality is detected, at least in a time-period in which the abnormality detector detects the abnormality; and a weighted averaging processor that receives as input the sound signal newly demodulated by the demodulator and the sound signal held by the holding unit, and after recovery from the abnormality, gradually switches from the sound signal held by the-holding unit to the sound signal demodulated by the demodulator, and outputs the averaged sound signal.

According to a second aspect of the present invention, there is provided an FM signal receiver including: a tuner that receives an FM signal and outputs an intermediate frequency signal, an AD converter that converts the intermediate frequency signal to a digital intermediate frequency signal; an FM detector that detects a digital sound signal from the digital intermediate frequency signal; an intermediate frequency abnormality detector that detects an abnormality of the digital intermediate frequency signal; a holding unit that, while the intermediate frequency abnormality detector detects the abnormality, holds the digital sound signal before detection of the abnormality; a weighted averaging processor which, after recovery from the abnormality, gradually switches from the digital sound signal held by the holding unit to the digital sound signal newly detected by the FM detector, and outputs the averaged digital sound signal; and a DA converter that converts the digital sound signal to an analog sound signal.

According to a third aspect of the present invention, there is provided a method of processing sound data in a sound signal processor including: when there is no abnormality in a sound data signal, demodulating and outputting the sound data signal; and when there is an abnormality in the sound data signal, outputting a signal before the abnormality; and wherein when the sound data signal is recovered from the abnormality, the signal demodulated before the abnormality and the signal demodulated after recovery from the abnormality are each weighted and added, and by gradually transitioning a weighting ratio from the signal demodulated before the abnormality to the signal demodulated after recovery from the abnormality, there is a smooth transition from the signal demodulated before the abnormality to the signal demodulated after recovery from the abnormality.

The meritorious effects of the present invention are summarized as follows.

According to the present invention, in a case where a sound signal becomes abnormal, since the sound signal before becoming abnormal is continuously outputted, and a weighted average after recovery from the abnormality is taken to gradually switch from the sound signal before the abnormality to the sound signal after recovery from the abnormality, it is possible to alleviate an aural sense of discomfort even in a case where, for example, the sound signal has become abnormal.

BRIEF DESCRIPTIONS OF THE DRAWINGS

Fig. 1 is a block diagram of an overall FM receiver according to one exemplary embodiment of the present invention.
Fig. 2A is a drawing describing a frequency spectrum distribution of a video signal and a sound signal; Fig. 2B is a drawing describing a state in which an FM modulation width of a sound signal is contained within a BPF band; and Fig. 2C is a drawing describing a state in which the FM modulation width of a sound signal exceeds the BPF band, with regard to a TV signal receiver.
Fig. 3A is a waveform diagram of a normal intermediate frequency signal waveform, and Fig. 3B is a waveform diagram of an abnormal intermediate frequency signal waveform, with regard to an FM receiver.
Fig. 4A is an abnormal intermediate frequency signal waveform; Fig. 4B is a sound signal waveform in a case where a sound signal from an abnormal intermediate frequency signal is demodulated; Fig. 4C is a sound signal waveform in which a time axis of Fig. 4B is compressed;
and Fig. 4D is a sound signal waveform diagram in a case where, when an abnormality has occurred in the intermediate frequency signal, the sound signal before the abnormality occurs is maintained.
Fig. 5A is a waveform diagram of an abnormal intermediate frequency signal; Fig. 5B is an output signal waveform diagram of a demodulator;
Fig. 5C is an output signal waveform diagram of a demodulator in which a time axis range has been enlarged; and Fig. 5D is an output signal waveform diagram of a selector, in one exemplary embodiment of the present invention.
Fig. 6 is a waveform image diagram of weighted average processing in the present invention.
Fig. 7 is a drawing showing a relationship between an FM-detected output waveform and a weighted average output waveform after recovery from an abnormality in one exemplary embodiment.
Fig. 8 is a flow diagram describing a method of processing sound data in an exemplary embodiment.
Fig. 9A is a block diagram of a conventional FM receiver described in Patent Document 1, and Fig. 9B is an explanatory diagram of interpolation by an interpolation signal.

PREFERRED MODES

First, an overall summary is given concerning an embodiment of the present invention. Drawings and reference symbols of the drawings, referred to in the description of the summary, are illustrative of one example of the embodiment, and variations of the embodiment according to the present invention are not limited thereby.

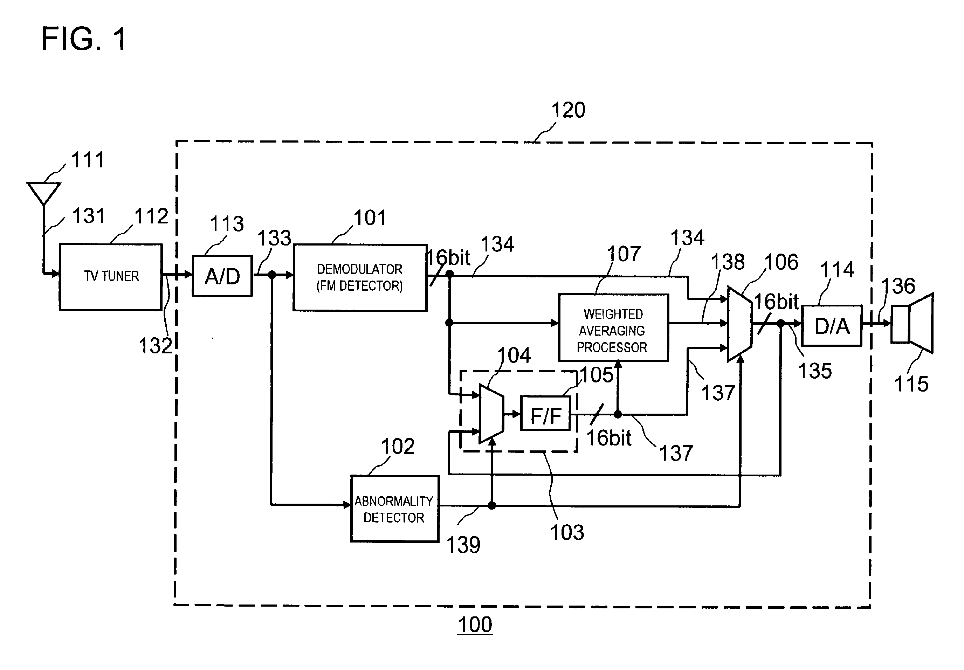

A sound signal processor in the embodiment of the present invention, as shown in Fig. 1 as an example, is provided with a demodulator 101 that demodulates a sound signal 134, an abnormality detector 102 that detects the sound signal 134 becoming abnormal, a holding unit 103 that receives as input the sound signal 134 demodulated by the demodulator 101 and holds a sound signal before detection of an abnormality, at least in a time-period in which the abnormality detector 102 detects the abnormality, and a weighted averaging processor 107 that receives as input the sound signal 134 newly demodulated by the demodulator 101 and a sound signal 137 held by the holding unit 103, and after recovery from the abnormality, gradually switches from the sound signal 137 held by the holding unit 103 to the sound signal 134 demodulated by the demodulator 101, and outputs an averaged sound signal 138. When the abnormality is detected, sound is switched from the sound signal demodulated by the demodulator 101, to the holding unit 103 that holds the sound signal demodulated by the demodulator 101 before the abnormality is detected. Furthermore, when there is a recovery from the abnormality, since there is a gradual switch from the sound signal held by the holding unit 103 to the sound signal newly demodulated by the demodulator 101, by the weighted averaging processor 107, a sense of discomfort felt when the abnormality occurs in the sound signal can be alleviated.

Furthermore, the demodulator 101 may detect and demodulate the sound signal 134 from a sound intermediate frequency signal 133 that is FM modulated, and the abnormality detector 102 may receive as input the sound intermediate frequency signal 133 and detect the sound signal 134 becoming abnormal. Moreover, processing time required from the sound intermediate frequency signal 133 being received as input by the abnormality detector 102 to the sound signal 134 becoming abnormal is shorter than processing time required for demodulation of the sound signal from the sound intermediate frequency signal 133 by the demodulator 101, and the holding unit 103, after the abnormality detector 102 detects the abnormality, holds the sound signal immediately before the demodulator 101 starts output of an abnormal sound signal.

Furthermore, the weighted averaging processor 107 gives weightings to each of the sound signal 137 held by the holding unit 103 and the sound signal 134 that is demodulated by the demodulator 101, and, gradually shifting the relative weight of the weightings from the sound signal 137 that is held by the holding unit 103 to the sound signal 134 that is demodulated by the demodulator 101, to take an average, a sound signal 138 that takes the average is outputted.

In addition, there is also a selector 106 that selects and outputs one of three sound signals (134, 137, and 138): the sound signal 134 that is newly demodulated by the demodulator 101, the sound signal 137 that is held by the holding unit 103, and the sound signal 138 that is outputted by the weighted averaging processor 107. When the abnormality detector 102 has not detected an abnormality, the selector 106 selects and outputs the sound signal 134 that is newly demodulated by the demodulator 101. Furthermore, while the abnormality detector 102 is detecting an abnormality, the sound signal held by the holding unit 103 is selected and outputted, and after the abnormality detector 102 has detected recovery from the abnormality, for a fixed time-period, the sound signal outputted by the weighted averaging processor 107 is selected and outputted.

Furthermore, when the abnormality detector 102 has not detected an abnormality, the holding unit 103 updates held data, by the sound signal 134 that is newly demodulated by the demodulator 101, and when the weighted averaging processor 107 performs processing of gradually switching from the sound signal 137 held by the holding unit 103 to the sound signal 134 that is demodulated by the demodulator 101, and of outputting, the held data is updated by the sound signal 138 that is outputted by the weighted averaging processor 107. In addition, the holding unit 103 includes a front selector 104 that selects the sound signal 134 that is outputted by the demodulator 101 and a sound signal 135 that is outputted by the selector 106, and a flip-flop circuit 105 in which data is updated by a sound signal selected by the front selector 104. When the abnormality detector 102 has not detected an abnormality, the front selector 104 selects the sound signal 134 that is outputted by the demodulator 101. Furthermore, when the abnormality detector 102 detects an abnormality and the weighted averaging processor 107 performs gradual switching from the sound signal 137 of the holding unit 103 to the sound signal 134 of the demodulator 101, the front selector 104 selects the sound signal that is outputted by the selector 106.

Furthermore, the abnormality detector 102 receives as input the sound intermediate frequency signal 133, and when the amplitude of the sound intermediate frequency signal 133 is abnormally small, detects an abnormality. When the amplitude of the sound intermediate frequency signal 133 is less than a threshold decided in advance for a predetermined continuous number of times, the abnormality detector 102 detects an abnormality. The sound signal processor may be formed to be integrated on one semiconductor substrate. That is, all of the above described configuration elements can be formed in 1 chip as a semiconductor integrated circuit.

Furthermore, as one example, as shown in Fig. 1, an FM signal receiver 100 in one embodiment of the present invention is provided with a tuner 112 that receives an FM signal 131 and outputs an intermediate frequency signal 132, an A/D converter 113 that converts the intermediate frequency signal 132 to the digital intermediate frequency signal 133, an FM detector 101 that detects the digital sound signal 134 from the digital intermediate frequency signal 133, an intermediate frequency abnormality detector 102 that detects an abnormality of the digital intermediate frequency signal 133, a holding unit 103 that, while the intermediate frequency abnormality detector 102 is detecting an abnormality, holds the digital sound signal 134 before detection, the weighted averaging processor 107 that, after recovery from the abnormality, gradually switches from the sound signal 137 held by the holding unit 103 to the digital sound signal 134 that is newly detected by the FM detector 101, and performs output, and a D/A converter 114 that converts a digital sound signal 135 to an analog sound signal 136.

Furthermore, the abovementioned A/D converter 113, the FM detector 101, the intermediate frequency abnormality detector 102, the holding unit 103, the weighted averaging processor 107, and the D/A converter 114 are formed by being integrated on one semiconductor substrate. That is, the abovementioned configuration may be included in one semiconductor integrated circuit 120.

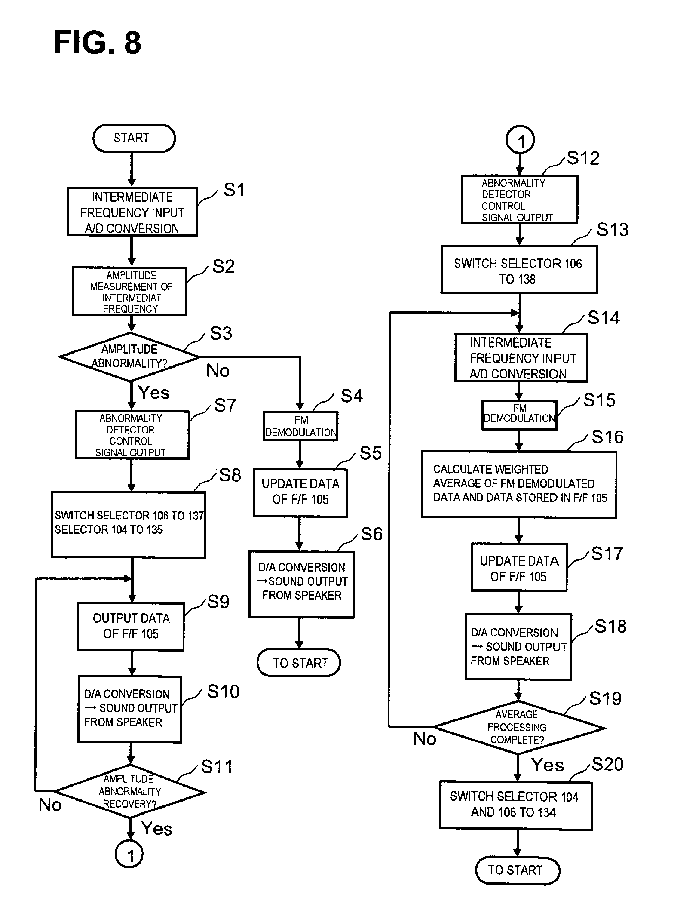

In addition, in a method of processing sound data in the sound signal processor of one preferred mode of the present invention, as in one example of processing shown in Fig. 8, when there is no abnormality in a sound data signal (a data signal that has undergone A/D conversion in step S1) (a case of No in step S3), the sound data signal is demodulated and outputted (steps S4 to S6); when there is an abnormality in the sound data signal (a case of Yes in step S3), a signal demodulated before the abnormality occurred is outputted (steps S7 to S10); when the sound data signal has recovered from the abnormality (Yes in step S11) a signal demodulated before the abnormality occurred (data stored in F/F 105 according to step S5 before the abnormality occurred) and a signal demodulated after recovery from the abnormality (data demodulated according to step S15) are each weighted and added (step S16); and by gradually transitioning a weighting ratio from a signal demodulated before the abnormality to a signal demodulated after recovery from the abnormality, there is a smooth transition from the signal demodulated before the abnormality to the signal demodulated after recovery from the abnormality. In an exemplary embodiment shown in Fig. 8, the data stored in the F/F 105 is updated according to a weighted average computation (step S16) result according to step S 17, but the data stored in the F/F 105 during the updating is data obtained by weighting and adding each of the signal demodulated before the abnormality, and the signal demodulated after recovery from the abnormality. Therefore, in the weighted average computation according to step S16, the signal demodulated before the abnormality and the signal demodulated after recovery from the abnormality are not simply weighted and added, but as a result the signal demodulated before the abnormality and the signal demodulated after recovery from the abnormality are weighted and added.

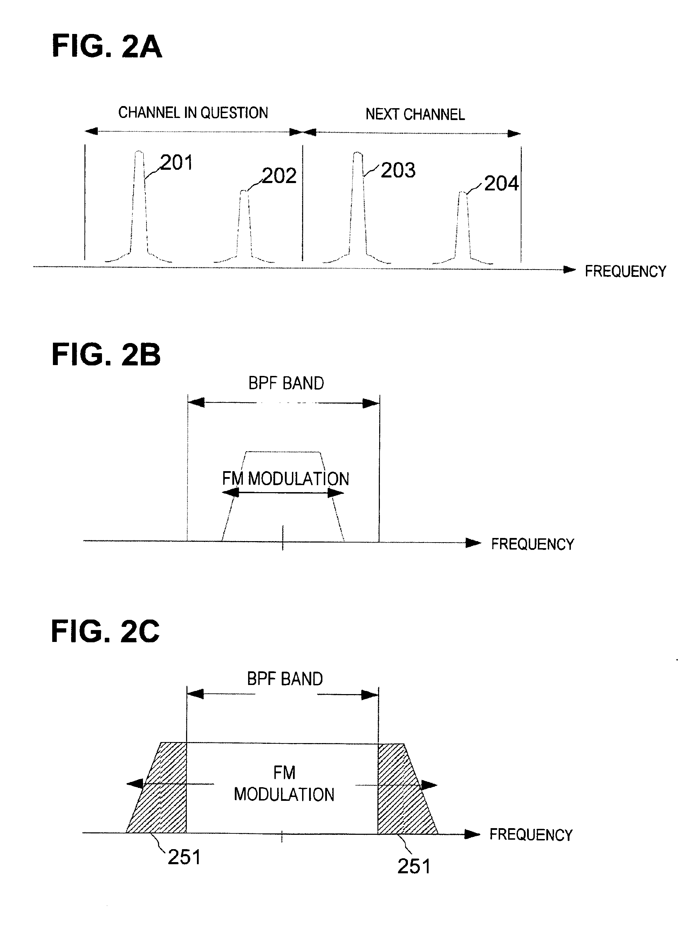

Next, before describing a more specific exemplary embodiment, a description is given in a little more detail concerning overmodulation of the FM signal already described as a topic of the present invention. Fig. 2A is a drawing describing a frequency spectrum distribution of a video signal and a sound signal, in a TV signal receiver. As is well known, a TV broadcasting signal mixes a video signal and a sound signal in a determined frequency band (channel), places them in a carrier wave, and transmits. A TV tuner receives the broadcast signal, and extracts each of the video signal and the sound signal from a desired frequency band (channel). As shown in Fig. 2A, the sound signal exists in a frequency band in between a frequency band of the video signal of a channel in question and a frequency band of a video signal of the next channel that is adjacent. That is, in Fig. 2A, 201 is the video signal of the channel in question, 202 is the sound signal of the channel in question, 203 is the video signal of the next channel, and 204 is a sound signal of the next channel. The sound signal 202 of the channel in question is positioned in a frequency band in between the video signal 201 of the channel in question and the video signal 203 of the next channel. Therefore, in order to distinguish the sound signal of the channel in question from another signal of an adjacent frequency and extract the sound signal, a band-pass filter BPF is used. A frequency band extracted by the band-pass filter BPF is wider than an FM modulation width of the sound signal, and is set narrow so that the signal of an adjacent frequency band can be shut off. If this type of band-pass filter characteristic is present, it is possible to extract only the sound signal of the selected channel. Furthermore, it is known that in FM modulation, sound volume is controlled, not by amplitude, but by FM modulation width. When the sound volume is high, the FM modulation width becomes large, and when the sound volume is low, the FM modulation width becomes small.

Here, in a country with a big land area but with a small number of antenna installations due to difficulties in installing the antennas, in order to reduce effects of noise to broadcast over the airwaves, FM modulation is overmodulated when a carrier wave is broadcast. However, in a case of overmodulation of sound, the TV tuner may output an abnormal sound signal. This is presumed to be because the TV tuner fails in extracting a sound signal.

Fig. 2B and Fig. 2C are drawings describing a band of a band-pass filter and FM modulation width of the sound signal. Fig. 2B is a case where the FM modulation width is contained within the band-pass filter band, and Fig. 2C is a case where the FM modulation width exceeds the band-pass filter band.

For example, in a case where a frequency of 5.5 MHz is FM modulated at 27 kHz, the spectrum is located in a frequency band of 5.5 MHz $\pm$27 kHz, and the spectrum is not sharp, but is spread out. In a case of extraction by a normal BPF, as in Fig. 2B, the whole of a laterally spread spectrum is extracted by the BPF. However, with FM overmodulation, the spread of the spectrum thereof becomes too large and goes beyond the BPF band. As shown in Fig. 2C, there is an FM modulated frequency band 251 that goes beyond the band-pass filter band, and it is not possible to extract a sound signal in this range.

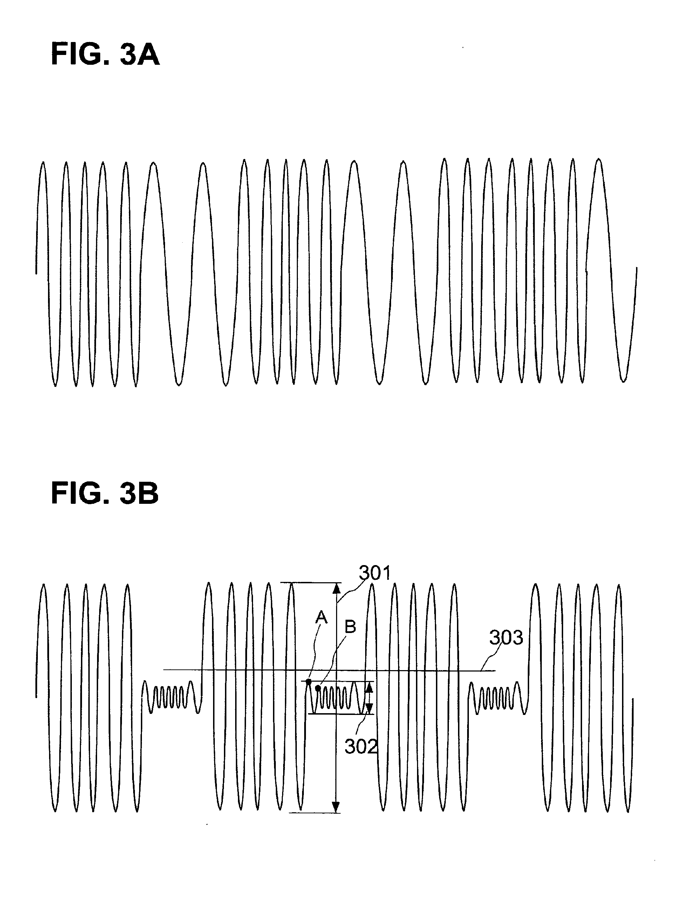

In a case of FM-modulation contained within a band of the band-pass filter BPF as in Fig. 2B, it is possible to normally extract an FM modulated sound signal as in Fig. 3A. On the other hand, in a case of an FM modulated band that is overmodulated as in Fig. 2C, and that goes beyond the band of the band-pass filter BPF, as shown in Fig. 3B, for places that have been overmodulated and where there is an extraction failure, amplitude becomes abnormally small, most sound signals disappear, and noise occurs. In a case where a TV tuner cannot handle an overmodulated sound signal, an abnormal signal is outputted, and an abnormal signal is received as input by the FM detector.

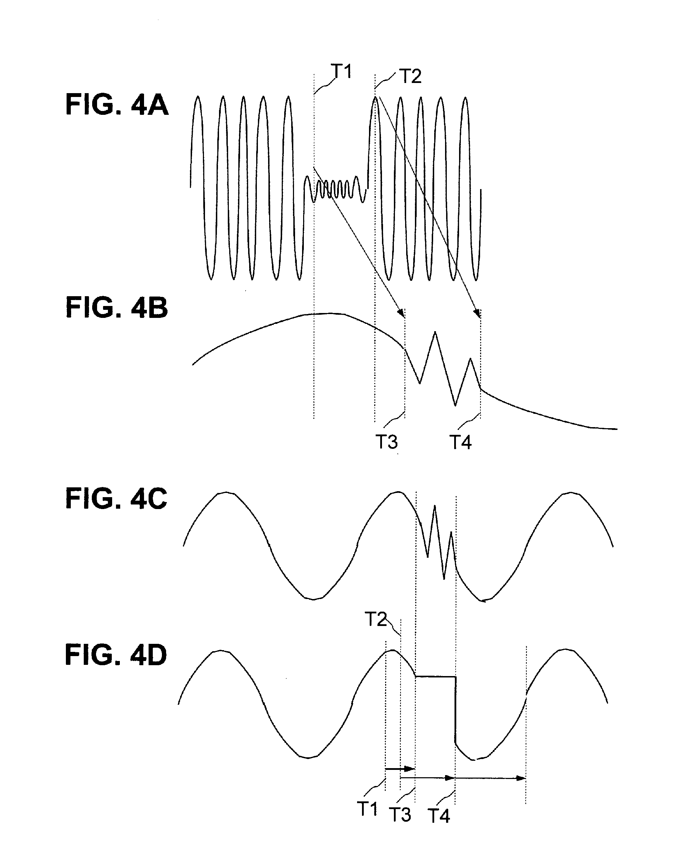

Fig. 4 shows a waveform of a case where a signal, for which there was a failure in extracting a sound signal that was overmodulated by this type of tuner, is FM-demodulated by the FM detector. Fig. 4A is a waveform of an intermediate frequency signal for which there was a failure in extraction due to overmodulation. In Fig. 4A, in an interval from T1 to T2, amplitude becomes abnormally small due to overmodulation. When this type of intermediate frequency signal is FM-demodulated by the FM detector, a sound signal is obtained as in Fig. 4B. Since processing time required for demodulation processing by the FM detector (demodulator) is involved, in Fig. 4A an abnormal intermediate frequency signal of interval T1 to T2 is outputted as a noise of the sound signal in interval T3 to T4 in Fig. 4B. Fig. 4C is a waveform diagram in which a time axis of Fig. 4B is compressed.

In a case of an FM modulated sound signal, the larger the modulation, the larger the sound volume (the amplitude after demodulation). Therefore, in a case of overmodulation, noise occurs at places where the sound volume is largest, and noise becomes unnecessarily pronounced. Consequently, as in Fig. 4D, an abnormal interval, in which it is detected that the sound signal is abnormal, is interpolated by maintaining the sound immediately before the abnormality, and switching from the interpolated sound signal to a sound signal demodulated by the demodulator by the sound signal returning to normal may be considered. In Fig. 4D, in an interval from T3 to T4 in which the demodulator outputs an abnormal sound signal, the sound signal immediately before the abnormality occurs is maintained and interpolated; the demodulator becomes able to demodulate a normal sound signal; and the sound signal demodulated by the demodulator after timing T4, is outputted. Even if this type of processing is done, the signal level changes to a rapid decline when the newly demodulated sound signal switches from the sound signal interpolated at timing T4, and a sound (noise) that is disagreeable to listen to is generated.

Next, a specific description is given concerning an exemplary embodiment of the present invention for solving the abovementioned types of problems.

FIRST EXEMPLARY EMBODIMENT

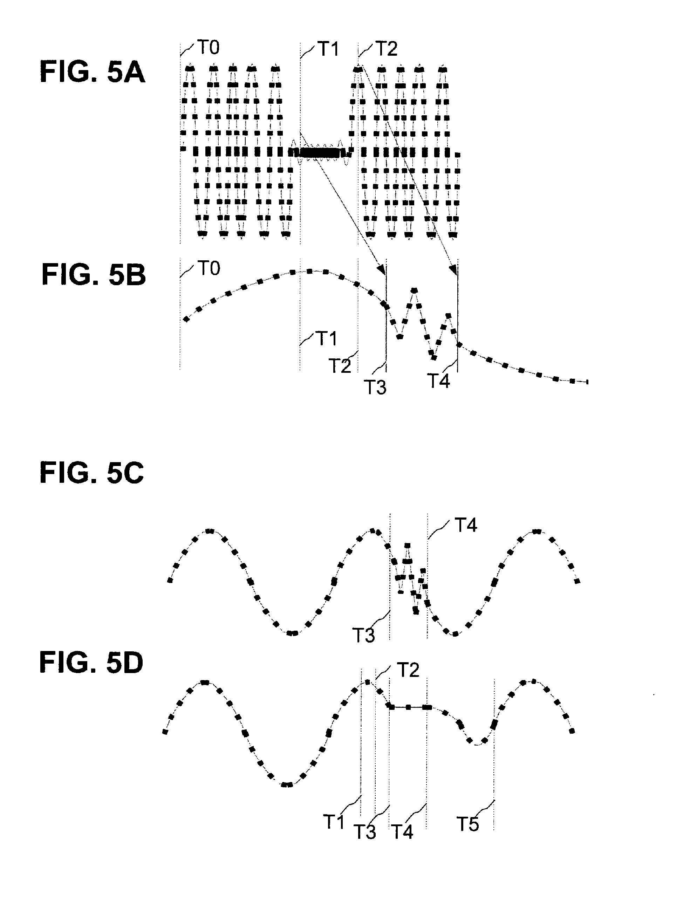

Fig. 5A is a waveform diagram of an abnormal intermediate frequency signal, Fig. 5B is an output signal waveform diagram of a demodulator, Fig. 5C is an output signal waveform diagram of a demodulator in which a time axis range has been enlarged, and Fig. 5D is an output signal waveform diagram of a selector, in one exemplary embodiment of the present invention. Figs. 5A to 5C are equivalent to Figs. 4A to 4C with sampling points added. Furthermore, in Fig. 5D, even if it becomes possible to output a normal sound signal at timing T4, switching is not performed from a sound signal interpolated in an abnormal interval as in Fig. 4D to a newly demodulated sound signal, but switching is performed gradually, taking time, from interval T4 to T5, from an interpolated sound signal to a sound signal newly demodulated by a demodulator, to be outputted. Specifically, weightings are giving to each of the interpolated sound signal and the sound signal newly demodulated by the demodulator, and, taking time from timing T4 to timing T5, and relative weight of the weighting is shifted from the sound signal interpolated up to timing T4 to the sound signal newly demodulated after T4, and a sound signal that takes a weighted averaging of both of these is outputted in an interval from timing T4 to timing T5.

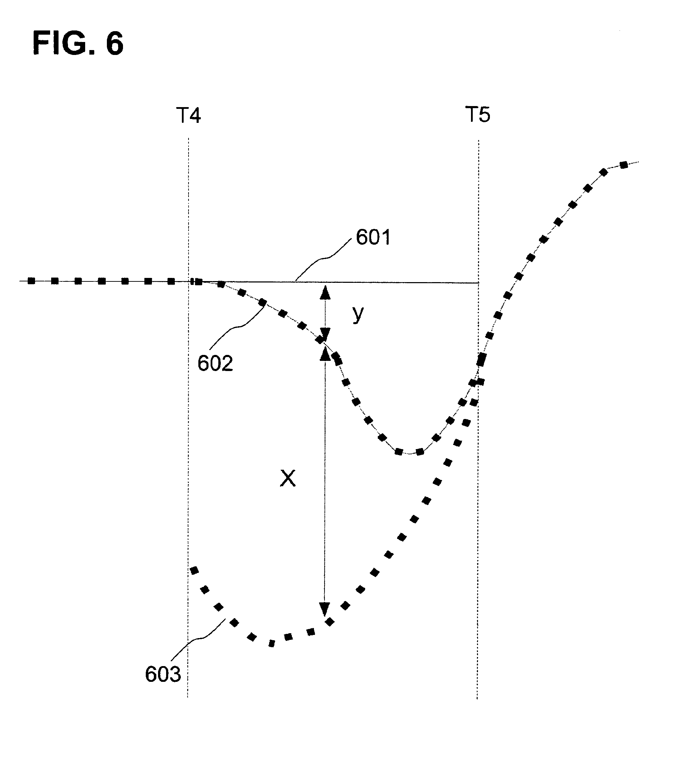

Fig. 6 is a drawing describing an image of weighted average processing according to the exemplary embodiment of the present invention, where this interval from timing T4 to timing T5 is further enlarged. In Fig. 6, 601 is the level of an interpolated sound signal outputted in an interval where the sound signal is abnormal, 603 is the level of a sound signal demodulated after the sound signal recovers to a normal state from an abnormal state, and 602 is the level of the sound signal taking a weighted average of both 601 and 603. If the level difference of the level of the weighted average signal 602 and the level of the demodulated signal 603 is X, and the level difference of the level of the interpolated signal 601 and the level of the weighted average signal 602 is Y, with regard to the relative weight of the interpolated signal 601 and the demodulated signal 603 with respect to the weighted average signal 602 at timing T4, the relative weight of the "interpolated signal 601" to the "modulated signal 603" is 1 to 0. Therefore, if the weighted average signal 602 is equal to the level of the interpolated signal 601, and the level difference of the demodulated signal 603 and the weighted average signal 602 is X = 1, the level different of the interpolated signal 601 and the weighted average signal 602 is Y = 0.

Thereafter, the relative weight of the interpolated signal 601 from T4 towards T5 is decreased, and the relative weight of the demodulated signal 603 is increased. The weighted average signal 602 of both thereof then gradually approaches the demodulated signal 603 from the interpolated signal 601.

At timing T5, the relative weight of the "interpolated signal 601" to the "demodulated signal 603" in the weighted average signal 602 becomes "0" to "1". Therefore, the level of the weighted average signal 602 becomes equal to the level of the demodulated signal 603, the level difference of the demodulated signal 603 and the weighted average signal 602 is X = 0, and the level difference of the interpolated signal 601 and the weighted average signal 602 is Y = 1. By the abovementioned processing, since there is a gentle transition from the interpolated signal 601 to the demodulated signal 603, it is possible to prevent the occurrence of a sound (noise) that is disagreeable to listen to, as shown with timing T4 in Fig. 4D.

Next, a description is given concerning an exemplary embodiment of a specific configuration of an FM receiver implementing the abovementioned weighted average processing. Fig. 1 is a block diagram of the overall FM receiver according to the first exemplary embodiment of the present invention. Fig. 1 is an FM receiver that receives a sound signal, in particular, of a TV broadcast. The TV broadcast mixes a video signal and a sound signal in a determined frequency band (channel), and places them in a carrier wave to be transmitted as a broadcast signal. The broadcast signal 131 is received by an antenna 111, and is received as input by a TV tuner 112. The TV tuner 112 extracts each of the video signal and the sound signal from a desired frequency band (channel). Since the sound signal has a frequency band in between the video signal band of the channel in question and the video signal band of the next channel, the extraction is performed by a band-pass filter BPF included in the tuner 112. A sound intermediate frequency signal (SIF) 132 thus extracted is outputted from the TV tuner 112, and is received as input by an analog/digital converter (A/D converter) 113.

The digital sound intermediate frequency signal (SIF) 133, which has undergone A/D conversion, is received as input by a demodulator (FM detector) 101 and an abnormality detector (SIF abnormality detection circuit) 102. The demodulator 101 performs FM detection and demodulation of a sound signal 134 from the sound intermediate frequency signal 133. The abnormality detector 102 detects an abnormality of the sound intermediate frequency signal 133, and if an abnormality is detected, controls interpolation processing. A holding unit 103, a weighted averaging processor 107, and a selection unit 106, in a case of an abnormality in the sound intermediate frequency signal 133, do not output the sound signal demodulated by the demodulator 101 as it is, but perform interpolation processing and recovery processing after the interpolation processing. The holding unit 103 holds the sound signal demodulated by the demodulator 101, or the sound signal outputted by the previous interpolation processing. When the sound intermediate frequency signal 133 has recovered from an abnormal state to a normal state, the weighted averaging processor 107 performs weighted average processing that gradually switches from the interpolated signal to a signal newly demodulated after recovery by the demodulator. The selector 106 selects and outputs one sound signal 135 from among three sound signals 134, 137, and 138: the sound signal 134 demodulated by the demodulator 101, the sound signal 137 held by the holding unit 103, and the sound signal 138 obtained by the weighted averaging processor 107 taking a weighted average of the sound signals 134 and 137.

A D/A converter 114 converts the digital sound signal 135 to an analog sound signal 136. A speaker 115 converts the analog sound signal 136, which is an electrical signal, to sound. The holding unit 103 is configured by a front selector 104 that performs selection, and a flip-flop circuit 105 that holds data; and the front selector 104 selects either of the sound signal 134 outputted by the demodulator 101 and the sound signal 135 outputted by the selector 106, to be sent to the flip-flop circuit 105. The flip-flop circuit 105 temporarily holds data outputted by the front selector 104.

Among various component elements of an FM signal receiver 100 shown in Fig. 1, excepting the antenna 111, the TV tuner 112, and the speaker 115, a structure from the A/D converter 113 to the D/A converter 114 can be easily configured as a semiconductor integrated circuit on one chip formed on one semiconductor substrate. By having an arrangement on one chip, it is possible to perform data processing at a higher data speed and with lower power consumption.

Next, a description is given concerning operation of the FM signal receiver 100 of Fig. 1, using a flow diagram describing a processing method of sound data of Fig. 8. In an initial state, there is no abnormality in the amplitude of the intermediate frequency signal 133. At this time, in Fig. 1, the front selector 104 and the selector 106 each select the sound signal 134 outputted by the demodulator 101. In step S1 of Fig. 8, the A/D converter 113 receives as input the analog sound intermediate frequency signal 132, and converts to the digital sound intermediate frequency signal 133. In step S2, the abnormality detector 102 measures the amplitude of the digital sound intermediate frequency signal 133. Since there is no abnormality in the waveform of the intermediate frequency signal 133, in step S3 the abnormality detector 102 judges that there is no abnormality in the amplitude of the intermediate frequency signal 133 (a judgment of No). Furthermore, the abnormality detector 102 sets, by an initial setting, each of the front selector 104 and the selector 106 to select the sound signal 134 outputted by the demodulator, according to a selector control signal 139. In step S4, the demodulator 101 performs FM demodulation and outputs the sound signal 134, and in step S5 the holding unit 103 takes in this sound signal 134, and updates data held in the flip-flop circuit (F/F) 105. The digital sound signal 134 demodulated by the demodulator 101 is converted to an analog sound signal 136 by the D/A converter 114 via the selector 106, and is outputted as sound from the speaker 115 (step S6). Processing from step S1 to step S6 is repeated until the amplitude of the intermediate frequency signal 133 becomes abnormal at timing T1 in the waveform diagram of Fig. 5.

At timing T1 in Fig. 5A when the amplitude of the intermediate frequency signal 133 becomes abnormal, the abnormality detector 102 detects an abnormality in step S3 of Fig. 8 (a judgment of Yes). In a case of a Yes judgment in step S3, the abnormality detector 102 detects timing at which the demodulator 101 starts to output an abnormal sound signal at timing T3, and outputs the selector control signal 139 (step S7). Respectively responding to the selector control signal 139, the selector 106 switches input data from the digital sound signal 134 demodulated by the demodulator 101 to the digital sound signal held by the flip-flop circuit 105, and also the front selector 104 switches input data from the digital sound signal 134 demodulated by the demodulator 101 to the digital sound signal 135 selected by the selector 106. Timing at which the front selector 104 and the selector 106 perform switching in response to the selector control signal is timing T3.

When the selector 106 switches input data from the sound signal 134 demodulated by the demodulator 101 to the sound signal 137 outputted by the flip-flop circuit 105, the sound signal 137 held by the flip-flop circuit 105 is outputted from the selector 106 instead of the sound signal 134 (step S9). The sound signal 137 is further converted by the D/A converter 114 to the analog sound signal 136, and is outputted as sound from the speaker 115 (step S10). Here, repetition of returning to step S9 and outputting of an interpolation sound signal stored in the flip-flop circuit 105 is repeated until the abnormality in the amplitude recovers (a judgment of No in step S11).

In Fig. 5A, at timing T2, on recovery from the abnormality in the amplitude, timing T4, at which the demodulator 101 starts to output a normal sound signal 134, is detected, a judgment of Yes in step S11 is made, and control proceeds to step S12.

In step S12, the abnormality detector 102 outputs the selector control signal 139. The selector 106 receives this selector control signal 139, and switches the input signal to the digital sound signal 138 outputted by the weighted averaging processor 107 (step S 13). On the other hand, the A/D converter 113 converts the analog sound intermediate frequency signal 132 after recovery from the abnormality to the digital sound intermediate frequency signal 133 (step S 14). The demodulator 101 receives this, performs FM demodulation, and outputs the demodulated digital sound signal 134 (step S15). The weighted averaging processor 107 receives as input the demodulated digital sound signal 134 outputted by the demodulator 101 and the digital sound signal 137 outputted by the holding unit 103, and obtains a weighted average of both by computation (step S16). The digital sound signal 138 outputted by the weighted averaging processor 107 is taken in by the flip-flop circuit 105 of the holding unit 103 via the selector 106 and the front selector 104, and the data held by the flip-flop circuit 105 is updated (step S17). Furthermore, the digital sound signal 138 outputted by the weighted averaging processor 107 is selected by the selector 106 and is received as input by the D/A convertor 114, and additionally is converted to the analog sound signal 136 and outputted from the speaker 115 as sound (step S18).

This processing from step S14 to step S18 is repeated until timing is at T5 in the waveform diagram of Fig. 5D (a case of No in step S 19). In the averaging processing, the weighted averaging processor 107 shifts a relative weight that takes averages, from the sound signal 137 held by the holding unit 103 (the flip-flop circuit 105) to the sound signal newly demodulated by the demodulator 101. In a case where the averaging processing of the weighted averaging processor 107 is completed (a case of Yes in step S19), the selector 106 and the front selector 104 are switched to the sound signal 134 demodulated by the demodulator 101, and control returns to the initial state (step S20). The above processing is repeated to perform sound reproduction processing.

Next, a more detailed description is given concerning an abnormal detection operation of the abnormality detector 102 shown in Fig. 1. The abnormality detector 102 examines peak-to-peak amplitude of the digital sound intermediate frequency signal 133, and if this value is less than a threshold for several times, an abnormality is judged. In the FM modulation, since amplitude displacement of the intermediate frequency signal due to sound volume does not occur, the amplitude is always constant. From this, since the amplitude exhibits an almost constant value for each one period, a normal intermediate frequency signal can be considered as being received as input. Fig. 3A shows a sound intermediate frequency signal SIF for normal FM modulation with amplitude being constant, and in contrast to this, Fig. 3B shows a sound intermediate frequency signal SIF where there is an abnormality in which the amplitude is suddenly interrupted.

In the waveform of Fig. 3B, a portion indicated by 301 shows a sufficient amplitude, and since a threshold 303 is exceeded, a normal state is judged by the abnormality detector (SIF abnormality detection circuit) 102. However, in the portion indicated by 302 in which the amplitude is abnormally small, the amplitude of the sound intermediate frequency signal SIF is interrupted, and the amplitude becomes smaller than the threshold 303. As a result, if an amplitude less than points A and B and the threshold 303 in Fig. 3B, for example, is detected twice, an abnormality is judged. For the abnormality detector 102 detecting an amplitude abnormality, it is possible to arbitrarily set as appropriate the number of times of detection and the level of the threshold 303 in accordance with needs.

Next, a description is given in further detail concerning the weighted average processing performed by the weighted averaging processor 107. The weighted averaging processor 107 takes a weighted average of sound sampling data 134, when normal, that has been FM-demodulated, and data 137 stored in the flip-flop circuit 105. A method of calculating the weighted average is as shown below (Expression 1).

$$D = (Xa + Yb)/R, \quad X + Y = R \quad \dots \text{(Expression 1)}$$

Here, "D" is output data, "X" and "Y" (positive numbers) are ratios, "a" is data stored in the flip-flop circuit, "b" is FM-demodulated sampling data, and "R" is bit width. Here, the bit width is R = 16.

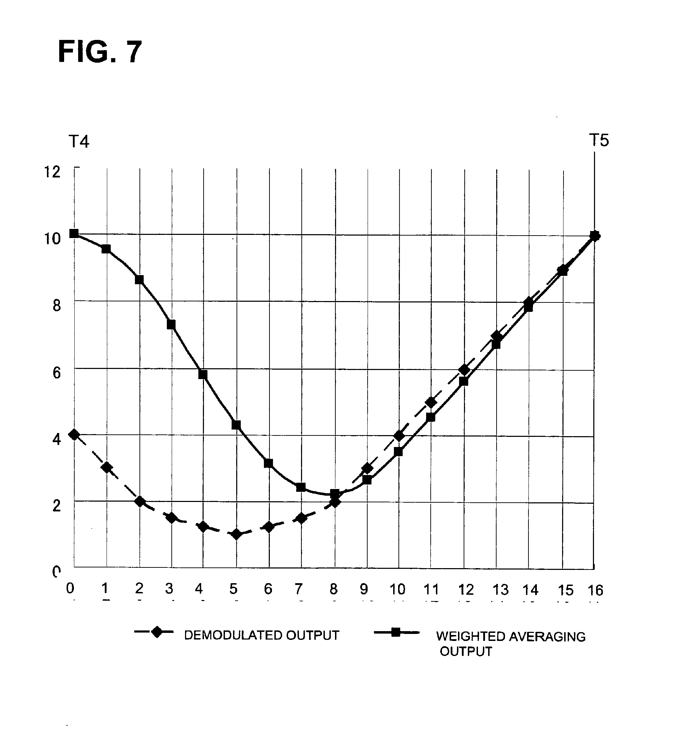

An example of performing the weighted average processing according to the abovementioned Expression 1 is shown below in Table 1 and Fig. 7. In Table 1, "a", "b", "X", and "Y" are respective numerical values substituted into Expression 1, and a calculation result "D" of Expression 1 is shown as output. Among the data plotted in Fig. 7, "demodulated output" are values of "b", and "weighted averaging output" are values of the calculation result "D". Furthermore, in Fig. 7, a time value on an X-axis is equivalent to a value of "Y".

[Table 1]

| Sampling data (decimal) | | Ratio | | |
|---|---|---|---|---|
| a | b | X | Y | Output |
| 10 | 4 | 16 | 0 | 10 |
| 10 | 3 | 15 | 1 | 9.5625 |
| 9.5625 | 2 | 14 | 2 | 8.617188 |
| 8.6171875 | 1.5 | 13 | 3 | 7.282715 |
| 7.282714844 | 1.25 | 12 | 4 | 5.774536 |
| 5.7745361331 | 1 | 11 | 5 | 4.282494 |
| 4.282493591 | 1.25 | 10 | 6 | 3.145308 |
| 3.145308495 | 1.5 | 9 | 7 | 2.425486 |
| 2.425486028 | 2 | 8 | 8 | 2.212743 |
| 2.212743014 | 3 | 7 | 9 | 2.655575 |
| 2.655575069 | 4 | 6 | 10 | 3.495841 |
| 3.495840651 | 5 | 5 | 11 | 4.52995 |
| 4.529950203 | 6 | 4 | 12 | 5.632488 |
| 5.632487551 | 7 | 3 | 13 | 6.743591 |
| 6.743591416 | 8 | 2 | 14 | 7.842949 |
| 7.842948927 | 9 | 1 | 15 | 8.927684 |
| 8.927684308 | 10 | 0 | 16 | 10 |

At the start of the weighted average processing, a value of 10 is stored in the flip-flop circuit 105, and normal sampling data immediately after a switch from abnormal to normal is assumed to be 4. Since "a" is data stored in the flip-flop circuit 105, when in an abnormal state, 10, which is the value immediately before the abnormality occurs, is maintained, and 10 is always outputted. Since "b" is demodulated data, if it is assumed to be traced by a curve as shown in the "demodulated output" of Fig. 7 to be outputted, 4, 3, 2, ... are outputted as in items of "output" in Table 1. Immediately after the selector 106 switches to output data of the weighted averaging processor 107, calculation is performed with "a" = 10 and "b" = 4, and with the ratio of "X" and "Y" being X:Y = 16:0. Since the ratio of the "b" side is 0, the value of the "a" side becomes output "D" without change, and "D" = 10. This output is stored in the flip-flop circuit 105. At the next sampling, "a" = 10 and "b" = 3, and the ratio X:Y = 15:1. Since the "b" side is now weighted, according to the calculation of Expression 1, the output "D" becomes D = 9.5625. The present output "D" is stored in the flip-flop circuit 105, that is, 9.5625 is stored. Next, calculation is done with "a" = 9.5625 stored in the flip-flop circuit 105 and the sampling data "b" = 2, and according to Expression 1, the output "D" is given by D = 8.617188. This processing is repeated, and when averaging is performed, a waveform as in the "weighted averaging output" of Fig. 7 is outputted.

This waveform is known to be outputted while approaching and smoothly changing to the waveform (sound data when normal) of the FM demodulated sampling data. By including this type of processing, it is possible to perform interpolation processing without the sound level suddenly changing, so that sound (noise) that is disagreeable to listen to, is not outputted. When processing as far as X:Y = 16:0 to 0:16 is finished, the weighted average processing is finished.

In Fig. 6, while the weighted average processing is being performed, the level of the data 601 that is being held is taken as not changing, but in the circuit of Fig. 1, since the data held in the holding unit 103 is updated by performing the weighted average processing, a result taking weighted averages shown in Fig. 7 is a little different from Fig. 6. However, by performing the weighted average processing for both, there is no change with regard to transitioning progressively, smoothly, and gradually, from data that is interpolated when there is an abnormality to data that is demodulated after recovery. In the circuit of Fig. 1, if data in the flip-flop circuit 105 is taken only when the abnormality detector 102 has detected a new abnormality in timing, it is possible to perform interpolation as shown in Fig. 6.

Furthermore, in the abovementioned exemplary embodiment, the weighted averaging processor 107 may be given a function of the selector 106, and the selector 106 omitted, and any of the sound signal 134 demodulated by the demodulator 101, the sound signal 137 held by the holding unit 103, and a sound signal that takes weighted averages of both thereof may be outputted from the weighted averaging processor 107 on a constant basis.

In the holding unit, a sound digital signal can be held as a waveform that approximates a Fourier series, for example, and in a weighted averaging unit it is also possible to take a weighted average of the waveform of the sound signal demodulated by the demodulator and a waveform held by the holding unit, to be outputted as a sound signal.

A description has been given above concerning the exemplary embodiment, but the present invention is not limited to only configurations of the abovementioned exemplary embodiment, and clearly includes every type of transformation and modification that a person skilled in the art can realize within the scope of the present invention.

The present invention is particularly effective in a demodulator in a case where a sound signal is overmodulated, with regard to reception of a TV broadcast, but is not limited thereto. There is no limitation to FM monaural broadcasting, and application is also possible to FM stereo broadcasting, and FM dual broadcasting. The invention is effective in general in reproduction and the like of a sound signal that has undergone FM overmodulation. In addition, in demodulation of a sound signal, without a limitation to FM modulation, in a case where the sound signal is abnormal, usage is possible for interpolation and reproduction that alleviate a sense of aural discomfort as much as possible.

## Claims

1. A sound signal processor **characterized by** comprising:

   a demodulator that demodulates a sound signal;
   an abnormality detector that detects said sound signal becoming abnormal;
   a holding unit that receives as input said sound signal demodulated by said demodulator, and holds said sound signal before an abnormality is detected, at least in a time-period in which said abnormality detector detects said abnormality; and
   a weighted averaging processor that receives as input said sound signal newly demodulated by said demodulator and said sound signal held by said holding unit, and after recovery from said abnormality, gradually switches from said sound signal held by said holding unit to said sound signal demodulated by said demodulator, and outputs the averaged sound signal.

2. The sound signal processor according to claim 1, wherein
   said demodulator detects and demodulates said sound signal from a sound intermediate frequency signal that has been FM modulated, and
   said abnormality detector receives as input said sound intermediate frequency signal and detects said sound signal becoming abnormal.

3. The sound signal processor according to claim 2, wherein
   a processing time required from said sound intermediate frequency signal being received as input by said abnormality detector to said sound signal becoming abnormal is shorter than a processing time required for demodulation of said sound signal from said sound intermediate frequency signal by said demodulator, and
   said holding unit holds said sound signal immediately before said demodulator starts output of said abnormal sound signal after said abnormality detector detects said abnormality,.

4. The sound signal processor according to any one of claims 1 to 3, wherein said weighted averaging processor gives weightings to each of said sound signal held by said holding unit and said sound signal that is demodulated by said demodulator, and, by gradually shifting relative weight of said weightings from said sound signal held by said holding unit to said sound signal that is demodulated by said demodulator, an average is taken, and said sound signal that takes said average is outputted.

5. The sound signal processor according to any one of claims 1 to 4, further comprising a selector that selects and outputs one of three sound signals: said sound signal newly demodulated by said demodulator, said sound signal held by said holding unit, and said sound signal outputted by said weighted averaging processor.

6. The sound signal processor according to claim 5, wherein when said abnormality detector does not detect said abnormality, said selector selects and outputs said sound signal newly demodulated by said demodulator, and wherein when said abnormality detector detects said abnormality, said selector selects and outputs said sound signal held by said holding unit, and, after said abnormality detector detects recovery from said abnormality, said selector selects and outputs said sound signal outputted by said weighted averaging processor for a fixed time-period.

7. The sound signal processor according to any one of claims 1 to 6, wherein when said abnormality detector does not detect said abnormality, said holding unit updates held data by said sound signal newly demodulated by said demodulator, and
wherein when said weighted averaging processor performs processing of gradually switching from said sound signal held by said holding unit to said sound signal demodulated by said demodulator, said holding unit updates held data by a sound signal outputted by said weighted averaging processor.

8. The sound signal processor according to claim 5 or 6, wherein
said holding unit includes a front selector that selects said sound signal outputted by said demodulator and said sound signal outputted by said selector, and a flip-flop circuit in which data is updated by said sound signal selected by said front selector; and
wherein when said abnormality detector does not detect said abnormality, said front selector selects said sound signal outputted by said demodulator, and
wherein when said abnormality detector detects said abnormality and said weighted averaging processor performs gradual switching from said sound signal of said holding unit to said sound signal of said demodulator, said front selector selects said sound signal outputted by said selector.

9. The sound signal processor according to any one of claims 1 to 8,
wherein said demodulator detects and demodulates said sound signal from a sound intermediate frequency signal that is FM modulated, and
wherein said abnormality detector receives as input said sound intermediate frequency signal, and wherein when an amplitude of said sound intermediate frequency signal is abnormally small, said abnormality detector detects an abnormality.

10. The sound signal processor according to claim 9, wherein when the amplitude of said sound intermediate frequency signal is less than a predetermined threshold for a predetermined continuous number of times, said abnormality detector detects said abnormality.

11. The sound signal processor according to any one of claims 1 to 10, wherein said sound signal processor is formed on one semiconductor substrate.

12. An FM signal receiver **characterized by** comprising:

a tuner that receives an FM signal and outputs an intermediate frequency signal;
an AD converter that converts said intermediate frequency signal to a digital intermediate frequency signal;
an FM detector that detects a digital sound signal from said digital intermediate frequency signal;
an intermediate frequency abnormality detector that detects an abnormality of said digital intermediate frequency signal;
a holding unit that, while said intermediate frequency abnormality detector detects said abnormality, holds said digital sound signal before detection of said abnormality;
a weighted averaging processor which, after recovery from said abnormality, gradually switches from said digital sound signal held by said holding unit to said digital sound signal newly detected by said FM detector, and outputs the averaged digital sound signal; and
a DA converter that converts said digital sound signal to an analog sound signal.

13. The FM signal receiver according to claim 12, further comprising a selector that selects any of: said digital sound signal held by said holding unit, said digital sound signal averaged by said weighted averaging processor, and said digital sound signal outputted by said FM detector, and that performs output to said DA converter.

14. The FM signal receiver according to claim 12 or 13, wherein said AD converter, said FM detector, said intermediate frequency abnormality detector, said holding unit, said weighted averaging processor, and said DA converter are formed on one semiconductor substrate.

**15.** A method of processing sound data in a sound signal processor, said method **characterized by** comprising:

when there is no abnormality in a sound data signal, demodulating and outputting said sound data signal; and
when there is an abnormality in said sound data signal, outputting a signal demodulated before said abnormality; and
wherein when said sound data signal is recovered from said abnormality, said signal demodulated before said abnormality and a signal demodulated after recovery from said abnormality are each weighted and added, and by gradually transitioning a weighting ratio from said signal demodulated before said abnormality to said signal demodulated after recovery from said abnormality, there is a smooth transition from said signal demodulated before said abnormality to said signal demodulated after recovery from said abnormality.

# FIG. 1

EP 2 290 829 A2

# FIG. 2A

CHANNEL IN QUESTION    NEXT CHANNEL

201    202    203    204

FREQUENCY

# FIG. 2B

BPF BAND

FM MODULATION

FREQUENCY

# FIG. 2C

BPF BAND

FM
MODULATION

FREQUENCY

251    251

# FIG. 3A

# FIG. 3B

EP 2 290 829 A2

FIG. 4A

T1    T2

FIG. 4B

T3    T4

FIG. 4C

FIG. 4D

T2

T1  T3  T4

FIG. 5A

FIG. 5B

FIG. 5C

FIG. 5D

# FIG. 6

## FIG. 7

# FIG. 8

START

INTERMEDIATE FREQUENCY INPUT A/D CONVERSION /S1

AMPLITUDE MEASUREMENT OF INTERMEDIAT FREQUENCY /S2

AMPLITUDE ABNORMALITY? S3
No → FM DEMODULATION /S4

Yes

ABNORMALITY DETECTOR CONTROL SIGNAL OUTPUT /S7

SWITCH SELECTOR 106 TO 137 SELECTOR 104 TO 135 /S8

OUTPUT DATA OF F/F 105 /S9

D/A CONVERSION → SOUND OUTPUT FROM SPEAKER /S10

AMPLITUDE ABNORMALITY RECOVERY? /S11
No
Yes

1

UPDATE DATA OF F/F 105 /S5

D/A CONVERSION → SOUND OUTPUT FROM SPEAKER /S6

TO START

1

ABNORMALITY DETECTOR CONTROL SIGNAL OUTPUT /S12

SWITCH SELECTOR 106 TO 138 /S13

INTERMEDIATE FREQUENCY INPUT A/D CONVERSION /S14

FM DEMODULATION /S15

CALCULATE WEIGHTED AVERAGE OF FM DEMODULATED DATA AND DATA STORED IN F/F 105 /S16

UPDATE DATA OF F/F 105 /S17

D/A CONVERSION → SOUND OUTPUT FROM SPEAKER /S18

AVERAGE PROCESSING COMPLETE? /S19
No
Yes /S20

SWITCH SELECTOR 104 AND 106 TO 134

TO START

FIG. 9A

PRIOR ART

# FIG. 9B

(A)

(B)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009193328 A
- JP 6152551 A
- JP P2003283349 A